# FASCICULE DE BREVET EUROPEEN

(11) **EP 4 377 563 B1**
(45) Date de publication et mention de la délivrance du brevet: **25.11.2026**
(21) Numéro de dépôt: 22754490.5
(22) Date de dépôt: 22.07.2022
(51) Int. Cl.: F02C 7/36, F02C 9/28, F02C 9/56, F02C 3/113

(54) **TRANSFERT DE PUISSANCE ENTRE L'ARBRE HAUTE PRESSION ET L'ARBRE BASSE PRESSION D'UNE TURBOMACHINE**
KRAFTÜBERTRAGUNG ZWISCHEN DER HOCHDRUCKWELLE UND DER NIEDERDRUCKWELLE EINER TURBOMASCHINE
TRANSFER OF POWER BETWEEN THE HIGH-PRESSURE SHAFT AND THE LOW-PRESSURE SHAFT OF A TURBOMACHINE

(30) Priorité: 29.07.2021 FR 2108280; 29.07.2021 FR 2108281
(43) Date de publication de la demande: 05.06.2024
(73) Titulaire: Safran Helicopter Engines, 64510 Bordes (FR)
(72) Inventeur: THIRIET, Romain Jean Gilbert, 77550 MOISSY-CRAMAYEL (FR); LEMAY, David Bernard Martin, 77550 MOISSY-CRAMAYEL (FR); MERCIER-CALVAIRAC, Fabien, 77550 MOISSY-CRAMAYEL (FR)
(74) Mandataire: Gevers & Orès
(86) Numéro de dépôt international: PCT/FR2022/051469
(87) Numéro de publication internationale: WO 2023/007076

(56) Documents cités:
- US-A1- 2006 225 431
- US-A1- 2015 369 138
- US-A1- 2020 056 549

## Description

### Domaine technique de l'invention

La présente invention concerne un dispositif de commande d'un système de transfert de puissance entre un arbre haute pression et un arbre basse pression d'une turbomachine d'un aéronef, un système propulsif d'un aéronef comportant un tel dispositif de commande et un aéronef comportant un tel système propulsif. L'invention concerne en outre un procédé de commande d'un système de transfert de puissance entre un arbre haute pression et un arbre basse pression d'une turbomachine d'un aéronef, ainsi qu'un programme d'ordinateur correspondant.

### Arrière-plan technologique

Il est connu de calculer des indicateurs de fatigue d'une turbomachine. Lorsque l'un de ces indicateurs atteint un seuil respectif, une opération de maintenance de la turbomachine doit être réalisée.

Or, une telle opération de maintenance immobilise l'appareil et présente un coût important.

Il peut ainsi être souhaité de rallonger l'intervalle de temps entre deux opérations de maintenance de la turbomachine.

Par ailleurs, le document US 2015/369138 A1 concerne le transfert de puissance entre l'arbre haute pression et l'arbre basse pression de la turbomachine.

### Résumé de l'invention

Il est donc proposé un dispositif de commande d'un système de transfert de puissance entre un arbre haute pression et un arbre basse pression d'une turbomachine d'un aéronef, caractérisé en ce qu'il comporte :
- un module d'analyse de fatigue de la turbomachine conçu pour déterminer, parmi deux indicateurs mesurant respectivement deux fatigues de la turbomachine, celui qui est en avance c'est-à-dire qui risque d'atteindre en premier un plafond respectif ; et
- un module de commande du système de transfert de puissance conçu pour ralentir la fatigue mesurée par l'indicateur en avance.

Les seuils sont généralement calculés pour une utilisation moyenne de la turbomachine, statistiquement observée. Or, chaque fatigue évolue plus ou moins vite suivant la manière dont la turbomachine est utilisée, ce qui en pratique ne correspond pas obligatoirement à l'utilisation moyenne retenue pour la fixation des seuils. Grâce à l'invention, l'utilisation réelle de la turbomachine est prise en compte et le transfert de puissance entre l'arbre haute pression et l'arbre basse pression permet de ralentir l'usure prépondérante dans cette utilisation réelle, et ainsi d'espacer les opérations de maintenance de la turbomachine.

L'invention peut en outre comporter une ou plusieurs des caractéristiques optionnelles suivantes, selon toute combinaison techniquement possible.

De façon optionnelle, une des deux fatigues est une fatigue oligocyclique d'un compresseur haute pression monté sur l'arbre haute pression et/ou d'une turbine haute pression montée sur l'arbre haute pression.

De façon optionnelle également, l'indicateur de la fatigue oligocyclique est calculé à partir d'une vitesse de rotation de l'arbre haute pression.

De façon optionnelle également, une des deux fatigues est une fatigue en fluage d'aubes d'une turbine haute pression montée sur l'arbre haute pression.

De façon optionnelle également, l'indicateur de la fatigue en fluage est calculé à partir d'une température de sortie de gaz en sortie de la turbine haute pression.

De façon optionnelle également, le dispositif de commande comporte en outre un module de régulation d'une puissance de sortie de la turbomachine, indépendamment de la commande du système de transfert de puissance.

De façon optionnelle également, le dispositif de commande comporte en outre, les deux indicateurs augmentant avec respectivement deux paramètres de fonctionnement de la turbomachine, un module d'analyse de fonctionnement de la turbomachine conçu pour détecter lorsqu'un plafond de fonctionnement est atteint par le paramètre associé à l'indicateur en avance, et le module de commande du système de transfert de puissance est en outre conçu, en réponse à la détection du plafond de fonctionnement atteint, pour commander le système de transfert de puissance en maintenant à ce plafond de fonctionnement le paramètre associé à l'indicateur en avance tout en laissant augmenter l'autre paramètre, de manière à augmenter une marge de puissance de sortie de la turbomachine.

De façon optionnelle également, le paramètre dont dépend l'indicateur de la fatigue oligocyclique est une vitesse de rotation de l'arbre haute pression.

De façon optionnelle également, le paramètre dont dépend l'indicateur de la fatigue en fluage est une température de sortie de gaz en sortie de la turbine haute pression.

Il est également proposé un système propulsif d'un aéronef, caractérisé en ce qu'il comporte :
- une turbomachine comportant :
   - un arbre haute pression,
   - un compresseur haute pression monté sur l'arbre haute pression,
   - une turbine haute pression montée sur l'arbre haute pression et conçue pour être traversé par des gaz,
   - un arbre basse pression, et
   - une turbine basse pression montée sur l'arbre basse pression et conçue pour être traversé par les gaz ayant traversé la turbine haute pression ;
- un système de transfert de puissance entre l'arbre haute pression et l'arbre basse pression ; et
- un dispositif de commande du système de transfert de puissance selon l'invention.

Il est également proposé un aéronef comportant un système propulsif selon l'invention.

Il est également proposé un procédé de commande d'un système de transfert de puissance entre un arbre haute pression et un arbre basse pression d'une turbomachine d'un aéronef, caractérisé en ce qu'il comporte :
- la détermination, parmi deux indicateurs mesurant respectivement deux fatigues différentes de la turbomachine, de celui en avance c'est-à-dire risquant d'atteindre en premier un plafond respectif ; et
- la commande du système de transfert de puissance pour ralentir la fatigue mesurée par l'indicateur en avance.

De façon optionnelle, la commande du système de transfert de puissance pour ralentir la fatigue mesurée par l'indicateur en avance est réalisée dans un premier mode, le procédé comportant en outre le passage dans un deuxième mode comportant, les deux indicateurs augmentant avec respectivement deux paramètres de fonctionnement de la turbomachine, la détection que le paramètre associé à l'indicateur en avance atteint en premier un plafond respectif, et, en réponse à la détection, la commande du système de transfert de puissance afin de maintenir à son plafond le paramètre de l'indicateur en avance et d'augmenter l'autre paramètre, de manière à augmenter une marge de puissance de sortie de la turbomachine.

Il est également proposé un programme d'ordinateur téléchargeable depuis un réseau de communication et/ou enregistré sur un support lisible par ordinateur, caractérisé en ce qu'il comprend des instructions pour l'exécution des étapes d'un procédé selon l'invention, lorsque ledit programme d'ordinateur est exécuté sur un ordinateur.

### Brève description des figures

L'invention sera mieux comprise à l'aide de la description qui va suivre, donnée uniquement à titre d'exemple et faite en se référant aux dessins annexés dans lesquels :
- la figure 1 est une vue schématique d'un aéronef et en particulier d'une turbomachine de cet aéronef,
- la figure 2 est un schéma bloc illustrant des étapes d'un premier procédé de commande d'un système de transfert de puissance de la turbomachine de la figure 1, pour repousser la prochaine opération de maintenance de la turbomachine,
- la figure 3 regroupe des chronogrammes illustrant l'évolution, pendant une période d'observation, d'une vitesse de rotation d'un arbre haute pression et d'une température de gaz en sortie d'une turbine haute pression de la turbomachine de la figure 1, dans un premier scénario de mise en œuvre du procédé de la figure 2,
- la figure 4 regroupe des chronogrammes illustrant l'évolution, après la période d'observation, de la vitesse de rotation de l'arbre haute pression, de la température des gaz en sortie de la turbine haute pression, et d'un transfert de puissance entre l'arbre haute pression et un arbre basse pression, dans le premier scénario de mise en œuvre du procédé de la figure 2,
- la figure 5 est similaire à la figure 3, pour un deuxième scénario de mise en œuvre du procédé de la figure 2,
- la figure 6 est similaire à la figure 4, pour le deuxième scénario de mise en œuvre du procédé de la figure 2,
- la figure 7 est un schéma bloc illustrant des étapes d'un deuxième procédé de commande d'un système de transfert de puissance de la turbomachine de la figure 1, pour augmenter une puissance de sortie fournie par la turbomachine, et
- la figure 8 regroupe des chronogrammes illustrant l'évolution de la vitesse de rotation de l'arbre haute pression, de la température des gaz en sortie de la turbine haute pression, et d'un transfert de puissance entre l'arbre haute pression et l'arbre basse pression, dans un scénario de mise en œuvre du procédé de la figure 7.

### Description détaillée de l'invention

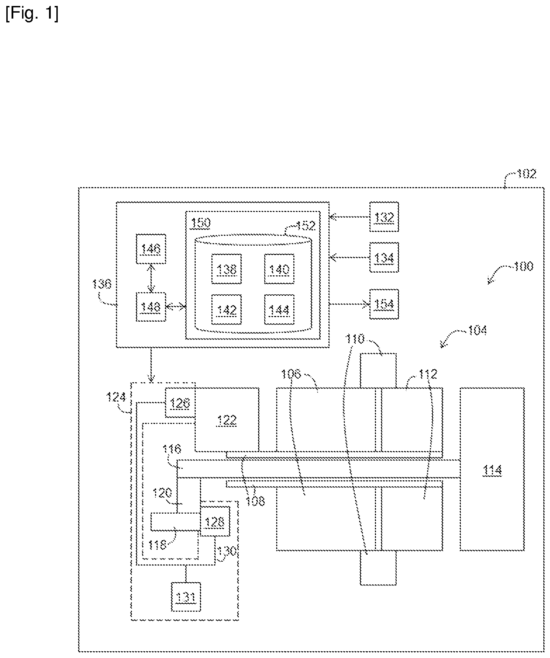

En référence à la figure 1, un exemple de système propulsif 100 selon l'invention va à présent être décrit. Ce système propulsif 100 équipe un aéronef 102, tel qu'un hélicoptère.

Le système propulsif 100 comporte tout d'abord une turbomachine 104, telle qu'un turbomoteur en particulier dans le cas d'un hélicoptère. Alternativement, la turbomachine pourrait être un turboréacteur ou bien un turbopropulseur.

La turbomachine 104 comporte tout d'abord un compresseur haute pression 106 conçu pour fournir de l'air à haute pression.

La turbomachine 104 comporte en outre un arbre haute pression 108 sur lequel le compresseur haute pression 106 est monté afin d'être entraîné par l'arbre haute pression 108. En fonctionnement de la turbomachine 104, l'arbre haute pression 108 présente une vitesse de rotation, notée NHP.

La turbomachine 104 comporte en outre une chambre de combustion 110 conçu pour réaliser une combustion entre un combustible et l'air à haute pression fournie par le compresseur haute pression 106, pour fournir des gaz d'échappement à haute vitesse.

La turbomachine 104 comporte en outre une turbine haute pression 112 conçue pour être traversée par les gaz d'échappement pour être entraînée en rotation. La turbine haute pression 112 est montée sur l'arbre haute pression 108 afin d'entraîner ce dernier en rotation.

En fonctionnement de la turbomachine 104, les gaz d'échappement présentent une température de sortie, notée T45, en sortie de la turbine haute pression 112.

La turbomachine 104 comporte en outre un turbine basse pression 114 (également appelée « turbine libre ») conçue pour être traversée par les gaz d'échappement ayant préalablement traversé la turbine haute pression 112.

La turbomachine 104 comporte en outre un arbre basse pression 116 sur lequel la turbine basse pression 114 est montée afin d'entraîner l'arbre basse pression 116 en rotation.

La turbomachine 104 comporte en outre un arbre de sortie 118 connecté à l'arbre basse pression 116, par exemple via un engrenage de sortie 120. Lorsque l'aéronef 102 est un hélicoptère, l'arbre de sortie 118 entraîne en particulier des pales de l'hélicoptère, généralement au travers d'une boîte de transmission principale (BTP).

La turbomachine 104 comporte en outre un système d'engrenages 122, généralement appelée « boîte d'engrenages accessoire » (de l'anglais « accessory gearbox »), connectée à l'arbre haute pression 108.

La turbomachine 104 est conçue pour fournir une puissance maximale Pn, qui peut varier suivant le régime de la turbomachine 104. La turbomachine 104 peut par exemple fonctionner suivant un ou plusieurs des régimes suivants : puissance maximale en continu (PMC), puissance maximale au décollage (PMD), avec un moteur non fonctionnel en vol, pour un bimoteur (OEIC, de l'anglais « with one engine inoperative in cruise », avec un moteur non fonctionnel en vol pendant deux minutes, pour un bimoteur (OEI2', de l'anglais « with one engine inoperative during deux minutes »). Cette puissance maximale Pn est atteinte lorsque la vitesse de rotation NHP atteint un plafond NHPmax ou bien lorsque la température de sortie T45 atteint un plafond T45max, par exemple suivant des conditions ambiantes, telles que la température ambiante T0 et la pression ambiante P0. Par exemple par temps chaud, c'est la température de sortie T45 qui peut limiter la puissance maximale Pn, tandis que par temps froid, cela peut être la vitesse de rotation NHP.

Le plafond NHPmax de la vitesse de rotation NHP correspond, dans l'exemple décrit, à la vitesse de rotation maximale de l'arbre haute pression 108. Le plafond T45max de la température de sortie T45 correspond par exemple à la température de sortie maximale. Ces plafonds peuvent varier suivant le régime de la turbomachine 104.

Le système propulsif 100 comporte en outre un système de transfert de puissance 124, conçu en particulier pour transférer de la puissance entre l'arbre haute pression 108 et l'arbre basse pression 116.

Dans l'exemple décrit, le système de transfert de puissance 124 comporte tout d'abord une machine électrique haute pression 126 connectée à l'arbre haute pression 108, par exemple via le système d'engrenage 122. Le système de transfert de puissance 124 comporte en outre une machine électrique basse pression 128 connectée à l'arbre basse pression 116, par exemple via l'arbre de sortie 118 et l'engrenage de sortie 120. Le système 124 de transfert de puissance comporte en outre une connexion électrique 130 reliant les machines électrique haute pression 126 et basse pression 128. Chacune de ces dernières est conçue pour sélectivement fonctionner en moteur et en générateur. Ainsi, lorsque la machine électrique haute pression 126 fonctionne en générateur tandis que la machine électrique basse pression 128 fonctionne en moteur, de la puissance est transférée depuis l'arbre haute pression 108 vers l'arbre basse pression 116. Inversement, lorsque la machine électrique basse pression 128 fonctionne en générateur tandis que la machine électrique haute pression 126 fonctionne en moteur, de la puissance est transférée depuis l'arbre basse pression 116 vers l'arbre haute pression 108.

Le système de transfert de puissance 124 peut comporter en outre un stockeur d'énergie 131, incluant par exemple une ou plusieurs batteries. Le système de transfert de puissance est ainsi en outre conçu pour transférer de la puissance entre le stockeur d'énergie 131 et chacun des arbres haute pression 108 et basse pression 116. Par exemple, le stockeur d'énergie 131 est conçu pour stocker de l'énergie électrique et est connecté aux machines électriques 126, 128, par exemple via la connexion électrique 130. La présence d'un tel stockeur d'énergie électrique reste néanmoins optionnelle, le transfert de puissance entre l'arbre haute pression 108 et l'arbre basse pression 116 pouvant être effectué sans nécessiter d'apport d'énergie de la part d'un stockeur.

Alternativement, le système de transfert de puissance 124 pourrait connecter mécaniquement et/ou hydrauliquement les arbres haute pression 108 et basse pression 116, sans nécessiter de machines électriques.

Certaines pièces du compresseur haute pression 106 et/ou de la turbine 114, subissent des contraintes répétées conduisant à une fatigue oligocyclique de ces pièces. En particulier, cette fatigue oligocyclique provient de variations cycliques de la vitesse de rotation NHP de l'arbre haute pression 108. Pour évaluer cette fatigue oligocyclique, le système propulsif 100 comporte en outre un compteur 132 d'un indicateur D1 de cette fatigue oligocyclique. En particulier, le compteur 132 est conçu pour calculer l'indicateur D1 à partir de la vitesse de rotation NHP, par exemple en calculant un nombre de cycles de la vitesse de rotation NHP. Par exemple, le compteur 132 met en œuvre un algorithme de comptage en cascade (de l'anglais « rainflow »).

En outre, la turbine haute pression 112 comporte des aubes recevant les gaz d'échappement sortant du compresseur haute pression 106. Les gaz d'échappement sont donc très chauds. Sous l'effet des efforts continus à chaud, les aubes ont tendance à se déformer, en particulier du fait de la force centrifuge. Ainsi, les aubes sont susceptibles de subir une fatigue en fluage. Pour évaluer cette fatigue en fluage des aubes, le système propulsif 100 comporte en outre un compteur 134 d'un indicateur D2 de cette fatigue en fluage. En particulier, le compteur 134 est conçu pour calculer l'indicateur D2 à partir de la température de sortie T45. Dans certains modes de réalisation, il peut être conçu pour calculer l'indicateur D2 en outre à partir de la vitesse de rotation NHP. En effet, cette dernière peut jouer un rôle dans la fatigue en fluage, mais moins important que la température de sortie T45. Par exemple, l'indicateur D2 est incrémenté tous les pas de temps de la valeur suivante : incrément_de_l'indicateur_D2 = constante x f(T45) x g(NHP) x durée_du_pas_de_temps, la fonction f donnant des valeurs plus élevées que la fonction g pour les valeurs possibles de T45 et NHP. Les pas de temps consécutifs sont par exemple de durée constante.

Des seuils D1max, D2max respectifs des indicateurs D1, D2 sont enregistrés dans respectivement les compteurs 132, 134 et chacun de ces derniers est conçu pour détecter lorsque son seuil D1max, D2max respectif est atteint, et pour émettre une alerte en réponse, indiquant qu'une opération de maintenance de la turbomachine104 doit être réalisée.

Autrement dit, lorsque l'un des indicateurs 132, 134 atteint son seuil D1max, D2max respectif, cela signifie que la durée de vie réelle a atteint une valeur minimale prédéterminée comme une alerte pour la nécessité de maintenance.

Le système propulsif 100 comporte en outre un dispositif de commande 136 conçu en particulier pour commander la turbomachine 104 et le système de transfert de puissance 124. Le dispositif de commande 136 comporte par exemple une unité électronique de commande moteur (« Electronic Engine Control Unit » en anglais, également désignée par l'acronyme EECU).

Le dispositif de commande 136 comporte en particulier : un module 138 de commande de la turbomachine 104, un module 140 de commande du système de transfert de puissance 124, un module 142 d'analyse de fatigue de la turbomachine 104, et un module 144 d'analyse de fonctionnement de la turbomachine 104.

Le dispositif de commande 136 peut par exemple être un système informatique comportant une unité de traitement de données 146 (telle qu'un microprocesseur) et une mémoire principale 148 (telle qu'une mémoire RAM, de l'anglais « Random Access Memory ») accessible par l'unité de traitement de données 146. Le système informatique comporte en outre par exemple une interface réseau et/ou un support 150 lisible par ordinateur, comme par exemple un support local (tel qu'un disque dur local) ou bien un support distant (tel qu'un disque dur distant et accessible via par l'interface réseau au travers d'un réseau de communication). Un programme d'ordinateur 152 contenant des instructions pour l'unité de traitement de données 146 est enregistré sur le support 150 et/ou téléchargeable via l'interface réseau. Ce programme d'ordinateur 152 est destiné à être chargé dans la mémoire principale 148, afin que l'unité de traitement de données 146 exécute ses instructions, pour la mise en œuvre des modules 138, 140, 142, 144 du dispositif de commande 136, qui sont alors des modules logiciels.

Alternativement, tout ou partie de ces modules 138, 140, 142, 144 pourrait être réalisé par des modules matériels, c'est-à-dire sous forme de circuits électroniques, par exemple micro-câblés, ne faisant pas intervenir de programme d'ordinateur.

Le dispositif de commande 136 est conçu pour fonctionner dans différents modes de fonctionnement. Dans l'exemple décrit, ces modes de fonctionnement comportent au moins certains des modes de fonctionnement suivants : ETEINT, RALENTI SOL, EMISSIONS REDUITES, DUREE DE VIE MAX, PUISSANCE MAX et AUTO.

Pour permettre la sélection d'un de ces modes, le système propulsif 100 comporte par exemple une interface homme/machine 154, de préférence utilisable par un conducteur de l'aéronef.

Les modes ETEINT et RALENTI SOL sont des modes activables notamment lorsque l'aéronef 102 est au sol. Les modes AUTO, EMISSIONS REDUITES, DUREE DE VIE MAX et PUISSANCE MAX sont des modes de vol activables lorsque l'aéronef est en vol.

Pour un hélicoptère, dans chacun des modes de vols, le module 138 de commande de la turbomachine 104 est conçu pour réguler la vitesse de l'arbre de sortie 118 à une vitesse constante, par exemple en commandant un débit d'injection de combustible dans la chambre de combustion 110. Suivant l'inclinaison des pales de l'hélicoptère, cette régulation peut nécessiter que la turbomachine 104 fournisse plus ou moins de puissance. Ainsi, la turbomachine 104 fournit une puissance de sortie (puissance de l'arbre de sortie 118, également appelée puissance nette) qui est indirectement modifiée par le module 138 de commande de la turbomachine 104.

La puissance nette est ainsi égale à la puissance au niveau de l'arbre basse pression 116 (puissance brute) + la puissance échangée entre l'arbre haute pression 118 et l'arbre basse pression 116 (avec éventuellement un facteur de rendement). Cette puissance échangée est positive pour un échange de l'arbre haute pression 118 vers l'arbre basse pression 116, ou bien négative pour un échange de l'arbre basse pression 116 vers l'arbre haute pression 118.

### Mode ETEINT

Dans ce mode de fonctionnement, le module 138 de commande de la turbomachine 104 maintient ce dernier éteint.

En outre, le module 140 de commande du système de transfert de puissance 124 commande ce dernier pour qu'aucun transfert de puissance ne se produise entre les machines électriques 126, 128, ni entre le stockeur d'énergie 131 et chacune des machines électriques 126, 128.

### Mode RALENTI SOL

Dans ce mode de fonctionnement, le module 138 de commande de la turbomachine 104 démarre cette dernière et stabilise la vitesse de l'arbre de sortie 118 à une vitesse de ralenti sol, par exemple 75% d'une vitesse nominale.

Pour le démarrage, le module 140 de commande du système de transfert de puissance 124 commande par exemple ce dernier pour que le stockeur d'énergie 131 fournisse de la puissance à l'arbre haute pression 108, au travers de la machine haute pression 126 dans l'exemple décrit.

Une fois la turbomachine 104 démarrée et la vitesse de l'arbre de sortie 118 stabilisée, le module 140 de commande du système de transfert de puissance 124 commande par exemple ce dernier pour transférer de la puissance depuis l'arbre haute pression 108 et/ou depuis l'arbre basse pression 116 vers le stockeur d'énergie 131 pour recharger ce dernier.

### Mode EMISSIONS REDUITES

Dans ce mode, l'objectif est de limiter les émissions de CO2 et de NOX de la turbomachine 104, ainsi que les nuisances acoustiques causées par cette dernière.

Le module 140 de commande du système de transfert de puissance 124 commande ce dernier pour que le stockeur d'énergie 131 fournisse de la puissance à l'arbre basse pression 116. Par exemple, le stockeur d'énergie 131 est commandé pour fournir le maximum de puissance possible.

En parallèle, le module 140 de commande du système de transfert de puissance 124 compare un niveau de charge du stockeur d'énergie 131 à un plancher prédéfini. Lorsque ce plancher est atteint, le module 140 bascule le dispositif de commande 136 dans l'un parmi les modes DUREE DE VIE MAX, PUISSANCE MAX et AUTO, de préférence dans le mode AUTO.

La bascule du mode EMISSIONS REDUITES vers un autre mode peut se faire suivant d'autres conditions que le niveau de charge du stockeur d'énergie 131, par exemple lorsque la vitesse de vol est supérieure à 80 kts et/ou lorsque la hauteur au sol est supérieure à 1 000 pieds.

### Mode DUREE DE VIE MAX

Dans ce mode, l'objectif est d'allonger la période entre deux opérations de maintenance de la turbomachine 104, sans impacter la puissance pouvant être fournie par la turbomachine 104.

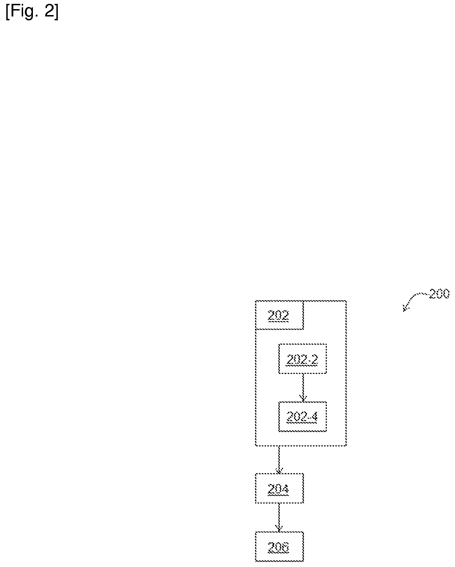

Ainsi, en référence à la figure 2, un exemple de procédé 200 selon l'invention de commande du système de transfert de puissance 124, lorsque le dispositif de commande 136 est dans le mode DUREE DE VIE MAX, va à présent être décrit.

Cette commande du système de transfert de puissance 124 est de préférence réalisée à « iso puissance de sortie (puissance nette) », c'est-à-dire alors que le module 138 de commande de la turbomachine 104 régule la vitesse de l'arbre de sortie 118 indépendamment de la commande du système de transfert de puissance 124.

Au cours d'une étape 202, le module d'analyse de fatigue 142 détermine, parmi les indicateurs D1, D2, celui qui est en avance c'est-à-dire risquant d'atteindre en premier son plafond D1max, D2max respectif.

Par exemple, le module d'analyse de fatigue 142 obtient tout d'abord une évolution de l'indicateur D1 de la fatigue oligocyclique à partir du compteur 132 et une évolution de l'indicateur D2 de la fatigue en fluage à partir du compteur 134, pendant une période d'observation du fonctionnement de la turbomachine 104. Par exemple la période d'observation s'étend de la dernière opération de maintenance réalisée à l'instant présent. Alternativement, la période d'observation correspond à une durée fixe dans le passé jusqu'à l'instant présent. La période d'observation présente par exemple une durée minimale prédéfinie, c'est-à-dire que le dispositif de commande 136 ne passe aux étapes suivantes que lorsque les évolutions des indicateurs D1, D2 sont connues pour au moins cette durée minimale. Ainsi, le dispositif de commande 136 peut acquérir suffisamment de données pour que l'analyse qui sera décrite plus loin soit pertinente.

Puis, le module d'analyse de fatigue 142 analyse les évolutions passées pour déterminer lequel des indicateurs D1, D2 est en avance.

Dans un exemple simple d'analyse, le module d'analyse de fatigue 142 peut par exemple faire une prédiction linéaire en considérant que l'indicateur D1, D2 augmentera dans le futur à une vitesse constante égale à la vitesse d'augmentation moyenne sur la période d'observation.

Au cours d'une étape 204, le module 140 de commande du système de transfert de puissance 124 commande ce dernier pour transférer de la puissance entre l'arbre haute pression 108 et l'arbre basse pression 116, pour ralentir la fatigue mesurée par l'indicateur D1, D2 en avance.

La puissance transférée est par exemple fixée à une valeur prédéfinie, dépendant de paramètres mesurés tels qu'une température extérieure T0 et/ou une pression extérieure P0 et/ou un régime de la turbine (par exemple, régime de décollage ou régime de croisière). De préférence, la valeur prédéfinie est la valeur optimale pour les paramètres considérés, c'est-à-dire celle pour laquelle la vitesse d'augmentation de l'indicateur D1, D2 en avance est la plus petite. Ainsi, le dispositif de commande 136 comporte par exemple une table associant pour chaque jeu de valeurs des paramètres, la valeur de puissance à transférer.

Par exemple, si l'indicateur D1 est en avance, le module 140 de commande du système de transfert de puissance 124 commande ce dernier pour réduire l'amplitude des variations de la vitesse de rotation NHP, ce qui ralentit la fatigue oligocyclique. « Ralentir la fatigue oligocyclique » signifie que la vitesse d'augmentation de la fatigue oligocyclique (et donc de l'indicateur D1) est plus faible avec le transfert de puissance qu'en l'absence de ce transfert de puissance, toutes choses égales par ailleurs. Pour cela, le système de transfert de puissance 124 est par exemple commandé pour réaliser l'une ou les deux des actions suivantes : diminuer la vitesse de rotation NHP lorsqu'elle devient trop élevée, et augmenter la vitesse de rotation NHP lorsqu'elle devient trop basse.

Par exemple, pour diminuer la vitesse de rotation NHP lorsqu'elle devient trop élevée, le module 140 de commande du système de transfert de puissance 124 compare la vitesse de rotation NHP à un seuil NHPh prédéfini. Lorsque la vitesse de rotation NHP passe au-dessus de ce seuil NHPh, le module 140 de commande du système de transfert de puissance 124 commande ce dernier pour transférer de la puissance de l'arbre haute pression 108 vers l'arbre basse pression 116. Le seuil NHPh est par exemple compris entre 90 % et 100 % (par exemple 95 %) d'une vitesse de rotation nominale comprise habituellement entre 40 000 et 55 000 tours par minute pour un turbomoteur, et entre 15 000 et 30 000 tours par minute pour un turboréacteur. La vitesse de rotation nominale est par exemple par convention la vitesse obtenue à la puissance maximale autorisée dans les conditions standard d'environnement.

Par exemple, pour cesser le transfert de puissance, le module 140 de commande du système de transfert de puissance 124 compare par exemple la vitesse de rotation NHP à un seuil NHPh' prédéfini (inférieur au seuil NHPh) et commande le système de transfert de puissance 124 pour cesser de transférer de la puissance lorsque la vitesse de rotation NHP passe au-dessous du seuil NHPh'. Alternativement, le transfert de puissance peut être arrêté par le module 140 lorsque l'indicateur D2 redevient l'indicateur en avance ou bien lors de la sortie du mode DURÉE DE VIS MAX.

D'un autre côté, pour augmenter la vitesse de rotation NHP lorsqu'elle devient trop basse, le module 140 de commande du système de transfert de puissance 124 compare par exemple la vitesse de rotation NHP à un seuil NHPb (inférieure au seuil NHPh) et, lorsqu'elle passe au-dessous du seuil NHPb, commande le système de transfert de puissance 124 pour transférer de la puissance de l'arbre basse pression 116 vers l'arbre haute pression 108. Le seuil NHPb est par exemple compris entre 80 % et 90 % (par exemple 85 %) de la vitesse de rotation nominale NHPn.

Par exemple, pour cesser le transfert de puissance, le module 140 de commande du système de transfert de puissance 124 compare la vitesse de rotation NHP à un seuil NHPb' prédéfini (supérieur au seuil NHPb et inférieur au seuil NHPh') et commande le système de transfert de puissance 124 pour cesser de transférer de la puissance lorsque la vitesse de rotation NHP passe au-dessus du seuil NHPb'. Alternativement, le transfert de puissance peut être arrêté par le module 140 lorsque l'indicateur D2 redevient l'indicateur en avance ou bien lors de la sortie du mode DURÉE DE VIS MAX.

Toujours à titre exemple, si l'indicateur D2 est en avance, le module 140 de commande du système de transfert de puissance 124 commande ce dernier pour limiter la température de sortie T45, ce qui ralentit la fatigue en fluage. « Ralentir la fatigue en fluage » signifie que la vitesse d'augmentation de la fatigue en fluage (et donc de l'indicateur D2) est plus faible avec le transfert de puissance qu'en l'absence de ce transfert de puissance, toutes choses égales par ailleurs.

Pour cela, le module 140 de commande du système de transfert de puissance 124 compare par exemple la température de sortie T45 à un seuil T45h et, lorsqu'elle passe au-dessus du seuil T45h, commande le système de transfert de puissance 124 pour transférer de la puissance de l'arbre basse pression 116 vers l'arbre haute pression 108.

Par exemple, pour cesser le transfert de puissance, le module 140 de commande du système de transfert de puissance 124 compare la température de sortie T45 à un seuil T45h' prédéfini (supérieur au seuil T45h) et commande par exemple le système 124 de transfert de puissance pour cesser de transférer de la puissance lorsque la température de sortie T45 passe au-dessus du seuil T45h'. Alternativement, le transfert de puissance peut être arrêté par le module 140 lorsque l'indicateur D1 redevient l'indicateur en avance ou bien lors de la sortie du mode DURÉE DE VIS MAX.

Deux exemples de mise en œuvre du procédé 200 vont à présent être décrits. Les chiffres utilisés pour ces exemples sont fictifs et arbitraires, et donnés à titre d'illustration uniquement.

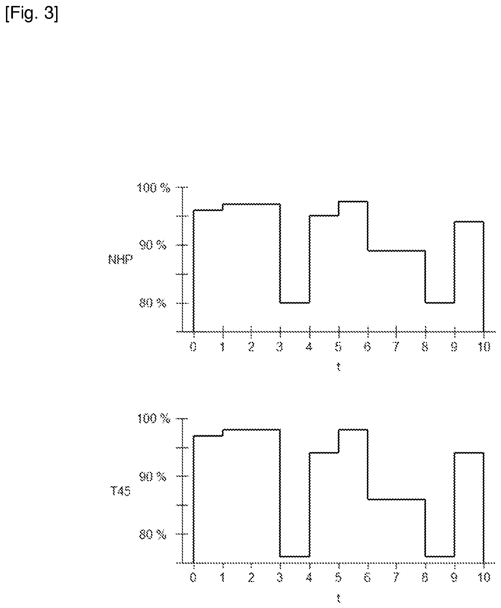

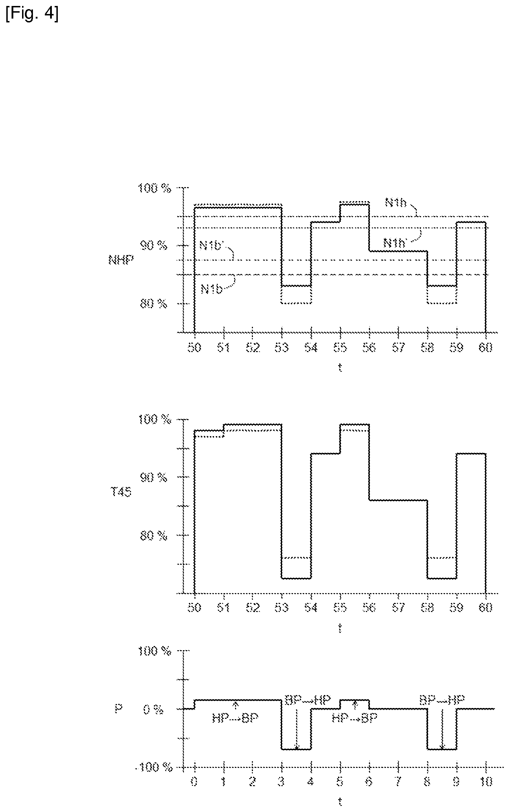

En référence aux figures 3 et 4 un premier exemple de mise en œuvre du procédé 200 va à présent être décrit.

Dans ce premier exemple, l'aéronef 102 est supposé réaliser en boucle une même mission de treuillage de 10 minutes. Les variations de la vitesse de rotation NHP et de la température de sortie T45 pendant la mission de treuillage sont illustrées sur la figure 3. Les indicateurs D1, D2 sont en outre supposés être à zéro au début de la première mission et la période d'observation est supposée être de 50 minutes (soit cinq missions de treuillage). Enfin, les seuils D1max, D2max sont supposés être de respectivement 1 000 et 2 000.

Comme cela est visible sur la figure 3, la mission de treuillage entraîne beaucoup de variation de la vitesse de rotation NHP et de la température de sortie T45.

Ainsi, dans l'exemple décrit, l'indicateur D1 augmente de 2 à chaque mission de treuillage (10 minutes), soit une augmentation ΔD1 de 10 sur la durée de la période d'observation I (50 minutes), tandis que l'indicateur D2 augmente de 3 à chaque mission de treuillage (10 minutes), soit une augmentation ΔD2 de 15 sur la durée de la période d'observation I (50 minutes).

Or, en mettant en œuvre une estimation linéaire, le module d'analyse de fatigue 142 prédit que le seuil D1max sera atteint à la 5 000^{e} minute de fonctionnement de la turbomachine 104 : (D1max / ΔD1) x I = (1 000 / 10) x 50 = 5 000, soit 4 950 minutes plus tard. Le module d'analyse de fatigue 142 prédit en outre que le seuil D2max sera atteint à la 6 667^{e} minute de fonctionnement de la turbomachine 104 : (D2max / ΔD2) x I = (2 000 / 15) x 50 = 6 667, soit 6 617 minutes plus tard.

Ainsi, dans cet exemple, le module d'analyse de fatigue 142 détermine que c'est l'indicateur D1 qui est en avance.

En référence à la figure 4, le module de commande du système de transfert de puissance 124 commande alors ce dernier selon ce qui a été décrit précédemment. En particulier, de la puissance est transférée depuis l'arbre haute pression 108 vers l'arbre basse pression 116, pour diminuer la vitesse de rotation NHP lorsque cette dernière est élevée et de la puissance est transférée depuis l'arbre basse pression 116 vers l'arbre haute pression 108 pour augmenter la vitesse de rotation NHP lorsque cette dernière est basse. Ainsi, l'amplitude des cycles de la vitesse de rotation NHP est réduite, ce qui implique un ralentissement de la fatigue oligocyclique.

Dans l'exemple décrit, les montants des puissances transférées indiquées sur la figure 4 font que l'indicateur D1 augmente de 1,6 par mission de treuillage (10 minutes), au lieu de 2 précédemment, et que l'indicateur D2 augmente de 3,1 par mission de treuillage (10 minutes), au lieu de 3 précédemment. Ainsi, en supposant que le fonctionnement futur du turboréacteur 104 reste identique au fonctionnement passé, l'indicateur D1 atteindra son seuil D1max au bout de 6 125 minutes et l'indicateur D2 atteindra son seuil D2max au bout de 6 400 minutes. Ainsi, dans cet exemple, l'indicateur D1 est toujours l'indicateur limitant mais la situation est améliorée puisque la périodicité de l'opération de maintenance est repoussée de 1 175 minutes.

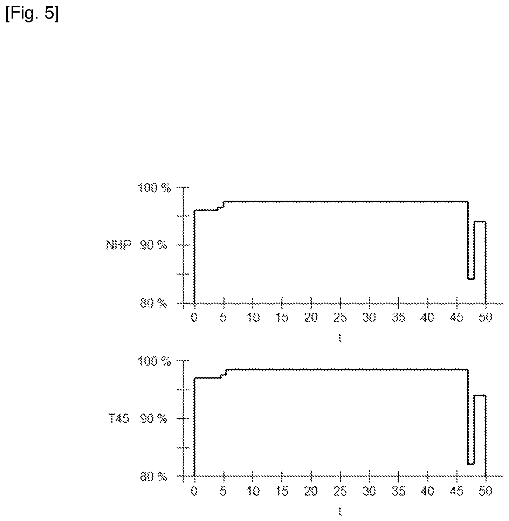

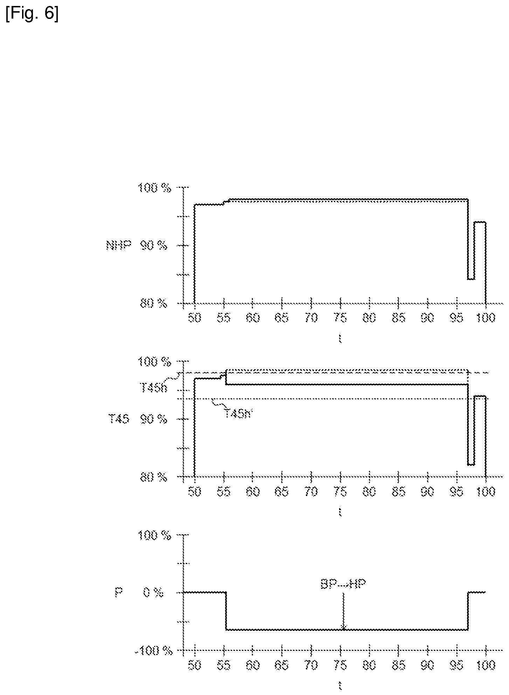

En référence aux figures 5 et 6 un deuxième exemple de mise en œuvre du procédé 200 va à présent être décrit.

Dans ce deuxième exemple, l'aéronef 102 est supposé réaliser en boucle une même mission de transport, par exemple de passagers, de 50 minutes. Les variations de la vitesse de rotation NHP et de la température de sortie T45 pendant la mission de transport sont illustrées sur la figure 5. Les indicateurs D1, D2 sont en outre supposés être à zéro au début de la première mission de transport et la période d'observation est supposé être de 50 minutes (soit une mission de transport). Enfin, les seuils D1max, D2max sont supposés être de respectivement 1 000 et 2 000.

Comme cela est visible sur la figure 5, la mission de transport entraîne peu de variation de la vitesse de rotation NHP et de la température de sortie T45, mais elles restent la majeure partie du temps toutes les deux à une très valeur élevée.

Ainsi, dans l'exemple décrit, l'indicateur D1 augmente de 2 à chaque mission de transport, et donc sur la durée de la période d'observation I (50 minutes), tandis que l'indicateur D2 augmente de 20 à chaque mission de transport, et donc sur la durée de la période d'observation I (50 minutes).

Or, en mettant en œuvre une estimation linéaire, le dispositif de commande 136 prédit que le seuil D1max sera atteint à la 25 000^{e} minute de fonctionnement de la turbomachine 104 : (D1max / ΔD1) x I = (1 000 / 2) x 50 = 25 000, soit au bout de 24 950 minutes. Le dispositif de commande 136 prédit en outre que le seuil D2max sera atteint à la 5 000^{e} minute de fonctionnement de la turbomachine 104 : (D2max / ΔD2) x I = (2 000 / 20) x 50 = 5 000, soit 4 950 minutes plus tard.

Ainsi, dans cet exemple, le dispositif de commande 136 détermine que c'est l'indicateur D2 qui est en avance.

En référence à la figure 6, le dispositif de commande 136 commande alors le système 124 de transfert de puissance selon ce qui a été décrit précédemment. En particulier, de la puissance est transférée depuis l'arbre basse pression 116 vers l'arbre haute pression 108 pour diminuer la température de sortie T45 lorsque cette dernière est élevée (lorsqu'elle passe au-dessus du seuil T45h). Ainsi, la température de sortie T45 est limitée, ce qui implique un ralentissement de la fatigue en fluage.

Dans l'exemple décrit, avec le transfert de puissance, l'indicateur D2 augmente de 15 par mission de 50 minutes (au lieu de 20 précédemment). La puissance transférée impliquant pas de changement notable dans les cycles de la vitesse de rotation, de sorte que l'augmentation de l'indicateur D1 reste sensiblement inchangée, avec une augmentation de D1 de 2 par mission de transport (50 minutes).

Ainsi, en supposant que le fonctionnement futur de la turbomachine 104 reste identique au fonctionnement passé, l'indicateur D2 atteindra son seuil D2max au bout de 6 600 minutes. Ainsi, dans cet exemple, l'indicateur D2 est toujours l'indicateur limitant mais la situation est améliorée puisque la périodicité de l'opération de maintenance est repoussée de 1 650 minutes.

Les deux exemples décrits précédemment sont extrêmes, de sorte qu'un indicateur prend largement le pas sur l'autre. Or, dans ces cas extrêmes, la conception de la turbomachine 104 ne permet pas de réduire autant que souhaité le taux d'augmentation de l'indicateur en avance.

Cependant, en pratique, l'aéronef 102 réalise une combinaison de missions fortement cyclées (type treuillage) et de missions à régime élevé constant (type transport). Le procédé 200 est ainsi répété dans le temps, de sorte que lorsque la progression d'un indicateur est limitée par la mise en œuvre du procédé 200 au détriment de l'autre indicateur, et que cet autre indicateur devient limitant (c'est-à-dire en avance), l'itération suivante du procédé 200 le détectera et cherchera à le limiter à son tour. De cette manière, les seuils D1max, D2max sont atteints sensiblement en même temps.

### Mode PUISSANCE MAX

Dans ce mode, l'objectif est de permettre d'avoir une puissance de sortie (puissance nette) de la turbomachine104 supérieure à la puissance maximale Pn, sans sensiblement modifier la durée de vie réelle de la turbomachine 104, c'est-à-dire sans que cette augmentation de la puissance de sortie (puissance nette) ne s'accompagne pas d'un rapprochement de la prochaine opération de maintenance de la turbomachine 104.

Ce mode peut être inhibé lorsque la limite de couple d'entrée de la boîte de transmission principale (BTP) est atteinte et/ou lorsque la pression extérieure P0 et/ou la température extérieure T0 ne permet pas par injection de puissance dans le corps HP de récupérer plus de puissance nette vue par le rotor hélicoptère.

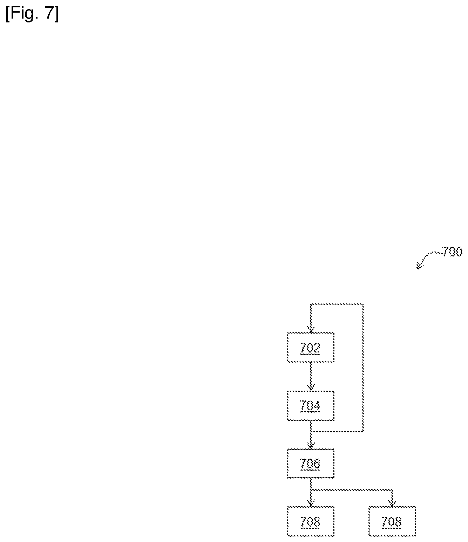

En référence à la figure 7, un exemple de procédé 700 selon l'invention de commande du système 124 de transfert de puissance, lorsque le dispositif de commande 136 est dans le mode « PUISSANCE MAX », va à présent être décrit.

Au cours d'une étape 702, le module d'analyse de fatigue 142 détermine parmi les indicateurs D1, D2, celui qui est en avance c'est-à-dire qui risque d'atteindre en premier son plafond respectif D1max, D2max. Cette détermination est par exemple réalisée comme décrit précédemment à l'étape 202 du procédé 200.

Au cours d'une étape 704, le module d'analyse de fonctionnement 144 détermine une puissance maximale réhaussée Pmax qu'il possible d'atteindre en tenant compte de la possibilité de transférer de la puissance entre l'arbre haute pression 108 et l'arbre basse pression 116 suivant l'indicateur D1 ou D2 qui est en avance. Le module d'analyse de fonctionnement 144 affiche alors par exemple cette puissance maximale réhaussée Pmax dans l'interface homme/machine 154, à la place de la puissance maximale Pn de la turbomachine 104. Alternativement ou en complément, l'interface homme/machine 154 met à jour la marge de puissance restante, par rapport à la puissance maximale réhaussée Pmax à la place de la puissance maximale Pn. Cette marge est par exemple affichée en pourcentage. Par exemple, si la puissance maximale Pn est de 500 kW, et si la puissance maximale réhaussée Pmax est de 520 kW tandis que la puissance actuellement fournie est de 480 kW, la marge affichée passe de 4 % (1 - 480/500) à 7,7 % (1 - 480/520 %) lorsque le mode PUISSANCE MAX est sélectionné.

Les étapes 702 et 704 peuvent être répétées dans le temps, afin de mettre à jour l'affichage de l'interface homme/machine 154.

Comme expliqué précédemment, l'indicateur D1 est calculé à partir de la vitesse de rotation NHP et l'indicateur D2 est calculé (principalement) à partir de l'indicateur T45. Ainsi, si l'indicateur D1 est en avance, c'est lui qui définit la durée de vie réelle de la turbomachine 104 et il n'est pas souhaitable d'augmenter la vitesse de rotation NHP, pour ne pas impacter cette durée de vie réelle. De même, si l'indicateur D2 est en avance, c'est lui qui définit la durée de vie réelle de la turbomachine 104 et il n'est pas souhaitable d'augmenter la température de sortie T45, pour ne pas impacter cette durée de vie réelle.

Au cours d'une étape 706, le module d'analyse de fonctionnement 144 détecte que le paramètre NHP ou T45 associé à l'indicateur en avance D1 ou D2 atteint un plafond respectif NHPmax ou T45max, tandis que l'autre paramètre est encore en dessous de son plafond. Dans l'exemple décrit, ces plafonds NHPmax, T45max correspondent aux valeurs nominales NHPn, T45n.

En particulier, si l'indicateur D1 est en avance, le module d'analyse de fonctionnement 144 détecte quand la vitesse de rotation NHP atteint son plafond NHPmax. Si l'indicateur D2 est en avance, le module d'analyse de fonctionnement 144 détecte quand la température de sortie T45 atteint son plafond T45max.

En réponse à cette détection, au cours d'une étape 708, le module 140 de commande du système de transfert de puissance 124 commande ce dernier pour laisser augmenter le paramètre NHP ou T45 de l'indicateur D1 ou D2 n'ayant pas atteint son plafond, tout en maintenant à son plafond l'autre paramètre NHP ou T45, afin d'augmenter la puissance de sortie (puissance nette) de la turbomachine 104, en particulier au-dessus de la puissance maximale Pn.

En particulier, si l'indicateur D1 est en avance et la vitesse de rotation NHP est à son plafond NHPmax, le module 140 de commande du système de transfert de puissance 124 commande ce dernier pour transférer de la puissance depuis l'arbre haute pression 108 vers l'arbre basse pression 116. Ce transfert de puissance a tendance à faire baisser la vitesse de rotation NHP, ce qui offre de la marge de puissance de sortie (puissance nette) afin de maintenir la vitesse de rotation NHP à son plafond NHPmax. Ainsi, la vitesse d'augmentation de la fatigue oligocyclique reste sensiblement inchangée, de sorte que la vitesse d'augmentation de l'indicateur D1 reste sensiblement inchangée. En revanche, ce transfert de puissance fait augmenter la température de sortie T45 du fait que la baisse de la vitesse de rotation NHP augmente la richesse de combustion à iso puissance de sortie (puissance nette), de sorte que la fatigue en fluage accélère ce qui accélère donc la progression de l'indicateur D2 qui la mesure. Néanmoins, cela n'a pas d'impact sur la durée de vie réelle de la turbomachine 104 car c'est l'indicateur D1 qui est en avance et qui définit donc cette durée de vie réelle.

De même, si l'indicateur D2 est en avance et la température de sortie T45 est à son plafond T45max, le module 140 de commande du système de transfert de puissance 124 commande ce dernier pour transférer de la puissance depuis l'arbre basse pression 116 vers l'arbre haute pression 108. Ce transfert de puissance a tendance à faire baisser la température de sortie T45, ce qui offre de la marge au module 138 de commande de la turbomachine 104 pour augmenter la puissance de l'arbre de sortie 118. Cette augmentation de puissance maintient donc la température de sortie T45 à son plafond T45max. Ainsi, la vitesse d'augmentation de la fatigue en fluage reste sensiblement inchangée. En contrepartie de ce transfert de puissance, la vitesse de rotation NHP augmente, de sorte que la fatigue oligocyclique accélère, ce qui accélère donc la progression de l'indicateur D1 qui la mesure. Néanmoins, cela n'a pas d'impact sur la durée de vie réelle de la turbomachine car c'est l'indicateur D2 qui est en avance et qui définit donc cette durée de vie réelle.

De façon optionnelle, au cours d'une étape 710, si la turbomachine 104 dispose d'une marge de puissance, c'est-à-dire que la puissance de sortie (puissance nette) de la turbomachine 104 est inférieure à la puissance maximale réhaussée Pmax, le module 142 de commande du système de transfert de puissance 124 commande ce dernier pour transférer de la puissance au stockeur d'énergie 131 depuis l'arbre haute pression 108 (cas où l'indicateur D1 est en avance et la vitesse de rotation NHP est à son plafond NHPmax) ou bien depuis l'arbre basse pression 116 (cas où l'indicateur D2 est en avance et la température de sortie T45 est à son plafond T45max).

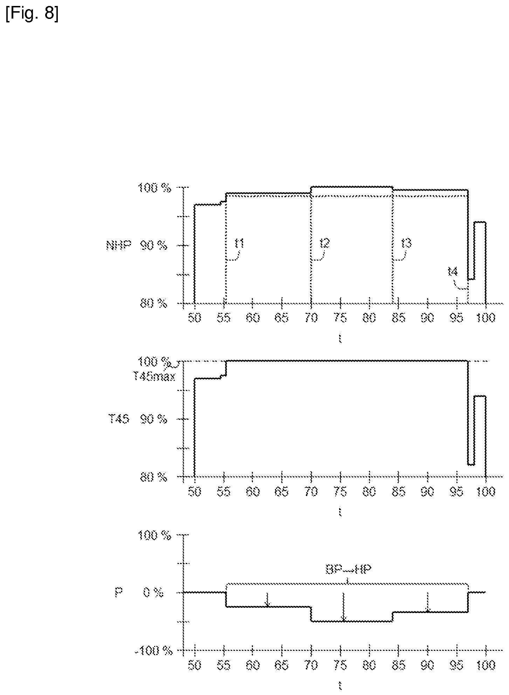

En référence à la figure 8, un deuxième exemple de mise en œuvre du procédé 700 va à présent être décrit.

Dans ce deuxième exemple, l'indicateur D2 est supposé être déterminé comme en avance.

A l'instant t1, il est détecté que la température de sortie T45 atteint son plafond T45max, supposé correspondre à la température de sortie nominale de sorte que la puissance de sortie (puissance nette) est égale à la puissance maximale Pn.

Cependant, la vitesse de l'arbre de sortie diminue indiquant que plus de puissance est nécessaire.

Ainsi, le système de transfert de puissance 124 transfert de la puissance de l'arbre basse pression 116 vers l'arbre haute pression 108. Cela a pour effet d'augmenter la puissance de sortie (puissance nette). Cette augmentation de la puissance de sortie (puissance nette) est obtenue en maintenant la température T45 à son plafond T45max et en faisant augmenter la vitesse de rotation NHP.

Comme cela est visible sur la figure 8, la puissance transférer peut varier au cours du temps (instants t2 et t3) selon les besoins pour maintenir la vitesse de l'arbre de sortie 118 constante.

A un instant t4, la puissance nécessaire à maintenir la vitesse de l'arbre de sortie 118 constante diminue, de sorte que la température de sortie T45 diminue et s'éloigne de son plafond T45max. Le transfert de puissance est donc stoppé.

La ligne pointillée horizontale illustre ce que serait la vitesse de rotation NHP en l'absence du transfert de puissance.

### Mode AUTO

Dans ce mode, le dispositif de commande 136 met en œuvre la stratégie du mode DUREE DE VIE MAX lorsqu'aucun des paramètres NHP, T45 n'a atteint son plafond NHPmax, T45max, et la stratégie du mode PUISSANCE MAX dès qu'un des paramètres NHP, T45 atteint son plafond NHPmax, T45max.

On notera par ailleurs que l'invention n'est pas limitée aux modes de réalisation décrits précédemment. Il apparaîtra en effet à la personne du métier que diverses modifications peuvent être apportées aux modes de réalisation décrits cidessus, à la lumière de l'enseignement qui vient de lui être divulgué.

Dans la présentation détaillée de l'invention qui est faite précédemment, les termes utilisés ne doivent pas être interprétés comme limitant l'invention aux modes de réalisation exposés dans la présente description, mais doivent être interprétés pour y inclure tous les équivalents dont la prévision est à la portée de la personne du métier en appliquant ses connaissances générales à la mise en œuvre de l'enseignement qui vient de lui être divulgué, et qui tombent sous la portée des revendications ci-jointes.

## Revendications

1. Dispositif (136) de commande d'un système de transfert de puissance (124) entre un arbre haute pression (108) et un arbre basse pression (116) d'une turbomachine (104) d'un aéronef (102), **caractérisé en ce qu'**il comporte :
- un module (142) d'analyse de fatigue de la turbomachine (104) conçu pour déterminer, parmi deux indicateurs (D1, D2) mesurant respectivement deux fatigues de la turbomachine (104), celui qui est en avance c'est-à-dire qui risque d'atteindre en premier un plafond respectif (D1max, D2max) ; et
- un module (140) de commande du système de transfert de puissance (124) conçu pour ralentir la fatigue mesurée par l'indicateur (D1, D2) en avance.

2. Dispositif de commande (136) selon la revendication 1, dans lequel une des deux fatigues est une fatigue oligocyclique d'un compresseur haute pression (106) monté sur l'arbre haute pression (108) et/ou d'une turbine haute pression (112) montée sur l'arbre haute pression (108).

3. Dispositif de commande (136) selon la revendication 2, dans lequel l'indicateur (D1) de la fatigue oligocyclique est calculé à partir d'une vitesse de rotation (NHP) de l'arbre haute pression (108).

4. Dispositif de commande (136) selon l'une quelconque des revendications 1 à 3, dans lequel une des deux fatigues est une fatigue en fluage d'aubes d'une turbine haute pression (112) montée sur l'arbre haute pression (108).

5. Dispositif de commande (136) selon la revendication 4, dans lequel l'indicateur (D2) de la fatigue en fluage est calculé à partir d'une température de sortie (T45) de gaz en sortie de la turbine haute pression (112).

6. Dispositif de commande (136) selon l'une quelconque des revendications 1 à 5, comportant en outre un module de régulation d'une puissance de sortie de la turbomachine (104), indépendamment de la commande du système de transfert de puissance.

7. Dispositif de commande (136) selon l'une quelconque des revendications 1 à 6, comportant en outre, les deux indicateurs (D1, D2) augmentant avec respectivement deux paramètres (NHP, T45) de fonctionnement de la turbomachine (104) :
- un module d'analyse de fonctionnement (144) de la turbomachine (104) conçu pour détecter lorsqu'un plafond de fonctionnement (NHPmax, T45max) est atteint par le paramètre (NHP, T45) associé à l'indicateur (D1, D2) en avance ;
et dans lequel le module (140) de commande du système de transfert de puissance (124) est en outre conçu, en réponse à la détection du plafond de fonctionnement atteint (NHPmax, T45max), pour commander le système de transfert de puissance (124) en maintenant à ce plafond de fonctionnement le paramètre (NHP, T45) associé à l'indicateur (D1, D2) en avance tout en laissant augmenter l'autre paramètre (NHP, T45), de manière à augmenter une marge de puissance de sortie de la turbomachine (104).

8. Dispositif de commande (136) selon les revendications 2 et 7 prises ensemble, dans lequel le paramètre (NHP) dont dépend l'indicateur (D1) de la fatigue oligocyclique est une vitesse de rotation (NHP) de l'arbre haute pression (108).

9. Dispositif de commande (136) selon les revendications 4 et 7 prises ensemble, dans lequel le paramètre (T45) dont dépend l'indicateur (D2) de la fatigue en fluage est une température (T45) de sortie de gaz en sortie de la turbine haute pression (112).

10. Système propulsif (100) d'un aéronef (102), **caractérisé en ce qu'**il comporte :
- une turbomachine (104) comportant :
• un arbre haute pression (108),
• un compresseur haute pression (106) monté sur l'arbre haute pression (108),
• une turbine haute pression (112) montée sur l'arbre haute pression (108) et conçue pour être traversé par des gaz,
• un arbre basse pression (116), et
• une turbine basse pression (116) montée sur l'arbre basse pression (116) et conçue pour être traversé par les gaz ayant traversé la turbine haute pression (114) ;
- un système de transfert de puissance (124) entre l'arbre haute pression (108) et l'arbre basse pression (116) ; et
- un dispositif (136) de commande du système de transfert de puissance (124) selon l'une quelconque des revendications 1 à 9.

11. Aéronef (102) comportant un système propulsif (100) selon la revendication 10.

12. Procédé (200) mis en œuvre par un dispositif selon l'une quelconque des revendications 1 à 9, de commande d'un système (124) de transfert de puissance entre un arbre haute pression (108) et un arbre basse pression (116) d'une turbomachine (104) d'un aéronef (102), **caractérisé en ce qu'**il comporte :
- la détermination, parmi deux indicateurs (D1, D2) mesurant respectivement deux fatigues différentes de la turbomachine (104), de celui en avance c'est-à-dire risquant d'atteindre en premier un plafond respectif (D1max, D2max) ; et
- la commande (206) du système (124) de transfert de puissance pour ralentir la fatigue mesurée par l'indicateur en avance.

13. Procédé selon la revendication 12, dans lequel la commande (206) du système (124) de transfert de puissance pour ralentir la fatigue mesurée par l'indicateur en avance est réalisée dans un premier mode, le procédé comportant en outre le passage dans un deuxième mode comportant :
- les deux indicateurs (D1, D2) augmentant avec respectivement deux paramètres (NHP, T45) de fonctionnement de la turbomachine (104), la détection (706) que le paramètre (NHP, T45) associé à l'indicateur (D1, D2) en avance atteint en premier un plafond respectif (NHPmax, T45max) ; et
- en réponse à la détection, la commande (708) du système (124) de transfert de puissance afin de maintenir à son plafond (NHP, T45) le paramètre (NHP, T45) de l'indicateur (D1, D2) en avance et d'augmenter l'autre paramètre (NHP, T45), de manière à augmenter une marge de puissance de sortie de la turbomachine (104).

14. Programme d'ordinateur (140) téléchargeable depuis un réseau de communication et/ou enregistré sur un support (138) lisible par ordinateur, **caractérisé en ce qu'**il comprend des instructions pour l'exécution des étapes d'un procédé (200) selon la revendication 12 ou 13, lorsque ledit programme d'ordinateur (140) est exécuté sur un dispositif selon l'une quelconque des revendications 1 à 9.

## Patentansprüche

1. Steuereinheit (136) eines Systems der Leistungsübertragung (124) zwischen einer Hochdruckwelle (108) und einer Niederdruckwelle (116) eines Turbotriebwerks (104) eines Luftfahrzeugs (102), **dadurch gekennzeichnet, dass** sie Folgendes umfasst:
- ein Modul (142) zur Analyse der Ermüdung des Turbotriebwerks (104), das ausgelegt ist, unter zwei Indikatoren (D1, D2), die jeweils zwei Ermüdungen des Turbotriebwerks (104) messen, denjenigen zu bestimmen, der fortgeschritten ist, das heißt, der wahrscheinlich als erster eine jeweilige Obergrenze (D1max, D2max) erreicht; und
- ein Modul (140) zur Steuerung des Systems der Leistungsübertragung (124), das ausgelegt ist, die von dem fortgeschrittenen Indikator (D1, D2) gemessene Ermüdung zu verlangsamen.

2. Steuereinheit (136) nach Anspruch 1, wobei eine der zwei Ermüdungen eine niederzyklische Ermüdung eines Hochdruckverdichters (106), der an der Hochdruckwelle (108) angebracht ist, und/oder einer Hochdruckturbine (112) ist, die an der Hochdruckwelle (108) angebracht ist.

3. Steuereinheit (136) nach Anspruch 2, wobei der Indikator (D1) der niederzyklischen Ermüdung ausgehend von einer Drehzahl (NHP) der Hochdruckwelle (108) berechnet wird.

4. Steuereinheit (136) nach einem der Ansprüche 1 bis 3, wobei eine der zwei Ermüdungen eine Kriechermüdung von Schaufeln einer Hochdruckturbine (112) ist, die an der Hochdruckwelle (108) angebracht ist.

5. Steuereinheit (136) nach Anspruch 4, wobei der Indikator (D2) der Kriechermüdung ausgehend von einer Ausgangstemperatur (T45) von Gas am Ausgang der Hochdruckturbine (112) berechnet wird.

6. Steuereinheit (136) nach einem der Ansprüche 1 bis 5, weiter umfassend ein Modul zur Regelung einer Ausgangsleistung des Turbotriebwerks (104) unabhängig von der Steuerung des Systems der Leistungsübertragung.

7. Steuereinheit (136) nach einem der Ansprüche 1 bis 6, wobei der zwei Indikatoren (D1, D2) jeweils mit zwei Parametern (NHP, T45) des Betriebs des Turbotriebwerks (104) erhöhen, weiter umfassend:
- ein Modul zur Analyse des Betriebs (144) des Turbotriebwerks (104), das ausgelegt ist, zu erfassen, wenn eine Betriebsobergrenze (NHPmax, T45max) von dem mit dem fortgeschrittenen Indikator (D1, D2) assoziierten Parameter (NHP, T45) erreicht wird;
und wobei das Modul (140) zur Steuerung des Systems der Leistungsübertragung (124) weiter ausgelegt ist, als Reaktion auf die Erfassung der erreichten Betriebsobergrenze (NHPmax, T45max) das System der Leistungsübertragung (124) so zu steuern, dass der mit dem fortgeschrittenen Indikator (D1, D2) assoziierte Parameter (NHP, T45) bei dieser Betriebsobergrenze gehalten wird, während ermöglicht wird, dass der andere Parameter (NHP, T45) erhöht wird, sodass eine Leistungsreserve am Ausgang des Turbotriebwerks (104) erhöht wird.

8. Steuereinheit (136) nach einem der Ansprüche 2 bis 7 zusammengenommen, wobei der Parameter (NHP) von dem der Indikator (D1) der niederzyklischen Ermüdung abhängt, eine Drehzahl (NHP) der Hochdruckwelle (108) ist.

9. Steuereinheit (136) nach einem der Ansprüche 4 bis 7 zusammengenommen, wobei der Parameter (T45), von dem der Indikator (D2) der Kriechermüdung abhängt, eine Ausgangstemperatur (T45) von Gas am Ausgang der Hochdruckturbine (112) ist.

10. Antriebssystem (100) eines Luftfahrzeugs (102), **dadurch gekennzeichnet, dass** es Folgendes umfasst:
- ein Turbotriebwerk (104), umfassend:
- eine Hochdruckwelle (108),
- einen Hochdruckverdichter (106), der an der Hochdruckwelle (108) angebracht ist,
- eine Hochdruckturbine (112), die an der Hochdruckwelle (108) angebracht ist und ausgelegt ist, von Gasen durchströmt zu werden,
- eine Niederdruckwelle (116), und
- eine Niederdruckturbine (116), die an der Niederdruckwelle (116) angebracht ist und ausgelegt ist, von den Gasen durchströmt zu werden, die die Hochdruckturbine (114) durchströmt haben;
- ein System der Leistungsübertragung (124) zwischen der Hochdruckwelle (108) und der Niederdruckwelle (116); und
- eine Steuereinheit (136) des Systems der Leistungsübertragung (124) nach einem der Ansprüche 1 bis 9.

11. Luftfahrzeug (102), das ein Antriebssystem (100) nach Anspruch 10 umfasst.

12. Verfahren (200), das von einer Vorrichtung nach einem der Ansprüche 1 bis 9 zur Steuerung eines Systems der Leistungsübertragung (124) zwischen einer Hochdruckwelle (108) und einer Niederdruckwelle (116) eines Turbotriebwerks (104) eines Luftfahrzeugs (102) eingesetzt wird, **dadurch gekennzeichnet, dass** es Folgendes umfasst:
- die Bestimmung, unter zwei Indikatoren (D1, D2), die jeweils zwei unterschiedliche Ermüdungen des Turbotriebwerks (104) messen, desjenigen, der fortgeschritten ist, das heißt, der wahrscheinlich als erster eine jeweilige Obergrenze (D1max, D2max) erreicht; und
- die Steuerung (206) des Systems (124) der Leistungsübertragung, um die von dem fortgeschrittenen Indikator (D1, D2) gemessene Ermüdung zu verlangsamen.

13. Verfahren nach Anspruch 12, wobei die Steuerung (206) des Systems (124) der Leistungsübertragung zur Verlangsamung der von dem fortgeschrittenen Indikator gemessenen Ermüdung in einem ersten Modus durchgeführt wird, wobei das Verfahren weiter den Übergang in einen zweiten Modus umfasst, umfassend:
- wobei der zwei Indikatoren (D1, D2) jeweils mit zwei Parametern (NHP, T45) des Betriebs des Turbotriebwerks (104) erhöhen, die Erfassung (706), dass der mit dem fortgeschrittenen Indikator (D1, D2) assoziierte Parameter (NHP, T45) als erster eine jeweilige Obergrenze (NHPmax, T45max) erreicht; und
- als Reaktion auf die Erfassung, die Steuerung (708) des Systems (124) der Leistungsübertragung, damit es den Parameter (NHP, T45) des fortgeschrittenen Indikators (D1, D2) an seiner Obergrenze (NHP, T45) hält und den anderen Parameter (NHP, T45) erhöht, sodass eine Leistungsreserve am Ausgang des Turbotriebwerks (104) erhöht wird.

14. Computerprogramm (140), das von einem Kommunikationsnetz herunterladbar ist und auf einem computerlesbaren Träger (138) gespeichert ist,
**dadurch gekennzeichnet, dass** es Anweisungen zur Ausführung der Schritte eines Verfahrens (200) nach Anspruch 12 oder 13, wenn das Computerprogramm (140) auf einer Vorrichtung nach einem der Ansprüche 1 bis 9 ausgeführt wird, umfasst.

## Claims

1. A control device (136) for controlling a power transfer system (124) for the transfer of power between a high-pressure shaft (108) and a low-pressure shaft (116) of a turbomachine (104) of an aircraft (102), **characterised in that** it comprises:
- a fatigue analysis module (142) for analysing the fatigue of the turbomachine (104) designed to determine from between two indicators (D1, D2) respectively measuring two fatigues of the turbomachine (104), which is the one that is the most in advance, i.e. is likely to reach a respective upper limit (D1max, D2max) first; and
- a control module (140) for controlling the power transfer system (124) designed to slow down the fatigue measured by the most advanced indicator (D1, D2).

2. The control device (136) according to claim 1, wherein one of the two fatigues is a low cycle fatigue of a high pressure compressor (106) mounted on the high pressure shaft (108) and/or of a high pressure turbine (112) mounted on the high pressure shaft (108).

3. The control device (136) as claimed in claim 2, wherein the low cycle fatigue indicator (D1) is calculated from a rotational speed (NHP) of the high pressure shaft (108).

4. The control device (136) according to any one of claims 1 to 3, wherein one of the two fatigues is creep fatigue of vanes of a high pressure turbine (112) mounted on the high pressure shaft (108).

5. The control device (136) according to claim 4, wherein the creep fatigue indicator (D2) is calculated from an outlet gas temperature (T45) at the outlet of the high pressure turbine (112).

6. The control device (136) according to any one of claims 1 to 5, further comprising a regulation module for regulating an output power of the turbomachine (104), independently of the control of the power transfer system.

7. The control device (136) according to any one of claims 1 to 6, further comprising the two indicators (D1, D2) increasing with respectively two operating parameters (NHP, T45) of the turbomachine (104):
- an operating analysis module (144) for analysing the operation of the turbomachine (104) designed to detect when an operating upper limit (NHPmax, T45max) is reached by the parameter (NHP, T45) associated with the most advanced indicator (D1, D2);
and wherein the control module (140) for controlling the power transfer system (124) is further designed, in response to the detection of the operating upper limit reached (NHPmax, T45max), to control the power transfer system (124) by maintaining at this operating upper limit the parameter (NHP, T45) associated with the most advanced indicator (D1, D2) while allowing the other parameter (NHP, T45) to increase, so as to increase an output power margin of the turbomachine (104).

8. The control device (136) according to claims 2 and 7 taken together, wherein the parameter (NHP) on which the low cycle fatigue indicator (D1) depends is a rotational speed (NHP) of the high pressure shaft (108).

9. The control device (136) according to claims 4 and 7 taken together, wherein the parameter (T45) on which the creep fatigue indicator (D2) depends is a gas outlet temperature (T45) at the outlet of the high-pressure turbine (112).

10. A propulsion system (100) for an aircraft (102), **characterised in that** it comprises:
- a turbomachine (104) comprising:
∘ a high-pressure shaft (108),
∘ a high-pressure compressor (106) mounted on the high-pressure shaft (108),
∘ a high-pressure turbine (112) mounted on the high-pressure shaft (108) and designed to be passed through by gases,
∘ a low-pressure shaft (116), and
∘ a low-pressure turbine (116) mounted on the low-pressure shaft (116) and designed to be passed through by the gases which have passed through the high-pressure turbine (114);
- a power transfer system (124) for transferring power between the high-pressure shaft (108) and the low-pressure shaft (116); and
- a control device (136) for controlling the power transfer system (124) according to any one of claims 1 to 9.

11. An aircraft (102) comprising a propulsion system (100) according to claim 10.

12. A method (200) carried out by a device according to any of claims 1 to 9, for controlling a power transfer system (124) for transferring the power between a high-pressure shaft (108) and a low-pressure shaft (116) of a turbomachine (104) of an aircraft (102), **characterised in that** it comprises:
- determining which of two indicators (D1, D2) measuring respectively two different fatigues of the turbomachine (104) is the most in advance, i.e. is likely to reach a respective upper limit (D1max, D2max) first; and
- controlling (206) the power transfer system (124) to slow down the fatigue measured by the most advanced indicator.

13. The method according to claim 12, wherein the control (206) for controlling the power transfer system (124) to slow down the fatigue measured by the most advanced indicator is carried out in a first mode, the method further comprising switching to a second mode comprising:
- the two indicators (D1, D2) increasing with respectively two operating parameters (NHP, T45) of the turbomachine (104), the detection (706) that the parameter (NHP, T45) associated with the most advanced indicator (D1, D2) first reaches a respective upper limit (NHPmax, T45max); and
- in response to the detection, controlling (708) the power transfer system (124) so as to maintain the parameter (NHP, T45) of the most advanced indicator (D1, D2) at its upper limit (NHP, T45) and to increase the other parameter (NHP, T45), so as to increase a power output margin of the turbomachine (104).

14. A computer program (140) downloadable from a communication network and/or recorded on a computer-readable medium (138), **characterised in that** it comprises instructions for executing the steps of a method (200) according to claim 12 or 13, when said computer program (140) is executed on a device according to any of claims 1 to 9.
